# EUROPEAN PATENT SPECIFICATION

(11) **EP 1 856 398 B1**
(45) Date of publication and mention of the grant of the patent: **12.04.2017**
(21) Application number: 06716894.8
(22) Date of filing: 14.02.2006
(51) Int. Cl.: F02C 9/18, F02K 3/075

(54) **A BLEED STRUCTURE FOR A BLEED PASSAGE IN A GAS TURBINE ENGINE**
ENTLÜFTUNGSSTRUKTUR FÜR EINEN ENTLÜFTUNGSDURCHGANG IN EINEM GASTURBINENMOTOR
STRUCTURE DE VENTILATION POUR UN PASSAGE DE VENTILATION DANS UN MOTEUR A TURBINE A GAZ

(30) Priority: 25.02.2005 US 593941 P; 24.03.2005 WO PCT/SE2005/000452
(43) Date of publication of application: 21.11.2007
(73) Proprietor: GKN Aerospace Sweden AB, 461 81 Trollhättan (SE)
(72) Inventor: MÅRTENSSON, Hans, S-461 54 Trollhättan (SE); NILSSON, Martin, S-416 55 Göteborg (SE)
(74) Representative: D Young & Co LLP
(86) International application number: PCT/SE2006/000204
(87) International publication number: WO 2006/091142

(56) References cited:
- EP-A1- 0 550 127
- EP-A2- 1 300 567
- WO-A1-96/11340
- DE-A1- 4 038 353
- US-A- 2 672 726
- US-A- 3 058 302
- US-A- 3 058 302
- US-A- 3 161 018
- US-A- 5 209 633
- US-A- 5 261 228
- US-A- 5 311 735
- US-B1- 6 438 941

## Description

### FIELD OF THE INVENTION AND PRIOR ART

The present invention relates to a bleed structure for a bleed passage in a gas turbine engine, the structure comprises a first wall portion defining a first side of an opening for the passage and a second wall portion defining a second side, opposite the first side of the opening. The bleed structure is intended to be arranged in the gas turbine engine so that the first wall portion is located upstream of the bleed passage opening and the second wall portion is located downstream of the opening.

The bleed structure may be used in stationary gas turbine engines, but is especially advantageous for aircraft jet engines. Jet engine is meant to include various types of engines, which admit air at relatively low velocity, heat it by combustion and shoot it out at a much higher velocity. Accommodated within the term jet engine are, for example, turbojet engines and turbo-fan engines. The invention will below be described for a turbo-fan engine, but may of course also be used for other engine types.

An aircraft gas turbine engine of the turbofan type generally comprises a forward fan and booster compressor, a middle core engine, and an aft low pressure power turbine. The core engine comprises a high pressure compressor, a combustor and a high pressure turbine in a serial relationship. The high pressure compressor and high pressure turbine of the core engine are interconnected by a high pressure shaft. The high-pressure compressor, turbine and shaft essentially form a high pressure rotor. The high-pressure compressor is rotatably driven to compress air entering the core engine to a relatively high pressure. This high pressure air is then mixed with fuel in the combustor and ignited to form a high energy gas stream. The gas stream flows aft and passes through the high-pressure turbine, rotatably driving it and the high pressure shaft which, in turn, rotatably drives the high pressure compressor.

The gas stream leaving the high pressure turbine is expanded through a second or low pressure turbine. The low pressure turbine rotatably drives the fan and booster compressor via a low pressure shaft, all of which form the low pressure rotor. The low pressure shaft extends through the high pressure rotor. Most of the thrust produced is generated by the fan.

Part of the incoming air flow to the aircraft engine enters an inner, primary gas duct, which guides the air to the combustor, and part of the incoming air flow enters an outer, secondary gas duct (fan duct) in which the engine bypass air flows.

In known aircraft engines, a bleed passage extends between the primary gas duct and the secondary gas duct. According to a known configuration, a variable bleed passage system is adapted to bleed air from the primary gas duct to the secondary gas duct. In certain operational conditions, compressed air is bled from the primary gas duct via the bleed passage and introduced in a high speed gas flow in the secondary gas duct. There is a risk that the bleed air will negatively effect the stability or efficiency of the engine or cause vibration problems. A small air cushion is created when the bleed air meets the gas flow in the fan duct, which locally increase the pressure in the forward end of the outlet. This increased pressure creates a non-uniform distribution of the bled gas flow, which leads to losses. More specifically, for a set extension of the outlet in the axial direction of the engine, the bleed gas will only flow into the gas duct through a small part of the outlet at the downstream end of the outlet.

WO 9611340 relates to a combined bleed valve and annular diffuser for a gas turbine inter compressor duct.

US 5261228 relates to an apparatus for bleeding air.

US 3058302 relates to a means for inducing a flow of cooling air for gas turbine engines.

US 5209633 relates to a high pressure compressor flow path bleed valve extraction slot.

DE 40 38 353 relates to a method and device for compressor air extraction.

EP 1 300 567 relates to a bleed deflector for a gas turbine.

US 6 438 941 relates to a bifurcated splitter for variable bleed flow.

### SUMMARY OF THE INVENTION

The purpose of the invention is to achieve a bleed structure for a gas turbine engine, which creates conditions for an effective bleed while not negatively influencing the operation of the engine or at least keep the negative effects to a minimum. More specifically, the invention aims at improving the flow distribution in the bleed passage with no substantial negative effects on the gas flow in a gas duct from which the air is bled and/or in a gas duct into which the bled air is introduced.

This purpose is achieved with the bleed structure of claim 1 or 2.

Such an opening configuration at a bleed passage outlet creates conditions for a more favorable pressure distribution in a gas flow in the bleed passage. Likewise, such an opening configuration at a bleed passage inlet creates conditions for a more favorable pressure distribution in the bleed passage.

The opening configuration is especially advantageous in applications for bleed between a primary gas duct and a secondary gas duct where a pressure difference is small between a compressor portion and the secondary gas duct (fan duct) in order to secure bleed through-flow to a sufficient extent and in the intended direction. The opening configuration is further advantageous in applications where there is a limited space available for the bleed opening.

According to a preferred embodiment of the invention, for a bleed passage outlet, an upstream wall portion ends at a position closer to a wall defining the gas duct, which is opposite said bleed passage opening, than the downstream wall portion. The speed of the introduced bleed gas may then be levelled to some extent at the outlet in the axial direction of the gas turbine and a larger bleed flow may be introduced than according to prior art. In other words, the bleed gas will flow into the gas duct through a larger part of the outlet.

Thus, one of the first and second wall portions is raised relative to the adjacent surfaces of the structure. This opening configuration at the outlet creates conditions for introducing a large bleed air flow into the gas duct.

According to a further preferred embodiment of the invention, the other of the first and second wall portions is flush with the adjacent surfaces of the structure. This opening configuration at the outlet creates conditions for substantially not negatively effecting the passing gas flow in the gas duct into which the bleed air is introduced.

Further , one of the first and second wall portions is lowered relative to the adjacent surfaces of the structure. This opening configuration at the inlet creates conditions for substantially not negatively effecting the passing gas flow in the gas duct from which the bleed air is extracted.

According to a further preferred embodiment of the invention, a transition from at least one of said first and second wall portion to an adjacent gas duct wall is even so that any disturbance caused by bleed on a passing gas flow is minimized. The transition portion is preferably smooth, uninterrupted and substantially flat. According to a further preferred embodiment of the invention, it comprises at least one airfoil in said bleed passage opening for guiding a gas flow in the passage. By virtue of the airfoils, the bleed air may be guided in a desired direction to/from the bleed passage. Further, the airfoils create conditions for a larger deflection of the bleed flow in a set axial distance.

Further advantageous embodiments and further advantages of the invention emerge from the detailed description below and the claims.

### BRIEF DESCRIPTION OF THE DRAWINGS

The invention will be explained below, with reference to the embodiments shown on the appended drawings, wherein
- FIG 1: illustrates an aircraft engine in a schematic cut side view,
- FIG 2: shows a cut side view of a first embodiment of a bleed structure outlet configuration,
- FIG 3: shows a cut side view of a second embodiment of a bleed structure outlet configuration,
- FIG 4: shows a schematic perspective view of a gas turbine engine component comprising the bleed structure of figure 2,
- FIG 5: shows a perspective view of the bleed structure of figure 2,
- FIG 6, 7, 8 and 9: each shows a bleed outlet structure according to an alternative embodiment,
- FIG 10: shows a cut portion of an aircraft engine according to an alternative embodiment in a schematic side view,
- FIG 11: shows a cut side view of a first embodiment of a bleed structure inlet configuration, and
- FIG 12: shows a cut side view of a second embodiment of a bleed structure inlet configuration.

### DETAILED DESCRIPTION OF PREFERRED EMBODIMENTS OF THE INVENTION

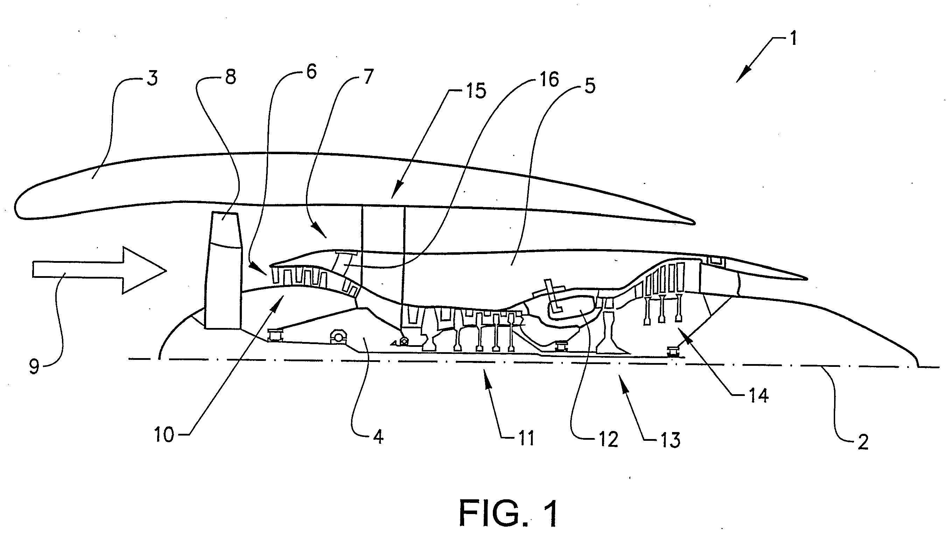

The invention will below be described for a turbofan gas turbine aircraft engine 1, which in figure 1 is circumscribed about an engine longitudinal central axis 2. The engine 1 comprises an outer casing 3, or nacelle, an inner casing 4, and an intermediate casing 5, which is concentric to the first two casings and divides the gap between them into an inner primary gas duct 6 for the compression of air and a secondary duct 7 in which the engine bypass air flows. Thus, each of the gas ducts 6,7 is annular in a cross section perpendicular to the engine longitudinal central axis 2.

The engine 1 comprises a fan 8 which receives ambient air 9, a booster or low pressure compressor (LPC) 10 and a high pressure compressor (HPC) 11 arranged in the primary gas duct 6, a combustor 12 which mixes fuel with the air pressurized by the high pressure compressor 11 for generating combustion gases which flow downstream through a high pressure turbine (HPT) 13 and a low pressure turbine (LPT) 14 from which the combustion gases are discharged from the engine.

A high pressure shaft joins the high pressure turbine 13 to the high pressure compressor 11 to form a high pressure rotor. A low pressure shaft joins the low pressure turbine 14 to the low pressure compressor 10 to form a low pressure rotor. The high pressure compressor 11, combustor 12 and high pressure turbine 13 are collectively referred to as a core engine. The low pressure shaft is at least in part rotatably disposed co-axially with and radially inwardly of the high pressure rotor.

A load carrying engine structure 15 is arranged between the outer casing 3 and the inner casing 4.

A plurality of circumferentially spaced bleed passages 16 extend between the primary gas duct 6 and the secondary gas duct 7. The bleed passages 16 define a flow path for routing air from the primary gas duct 6 to the secondary gas duct 7 and more specifically from an end region of the low pressure compressor 10. A bleed passage inlet is arranged in a gap between an upstream rotor and a downstream stator in the low pressure compressor 10.

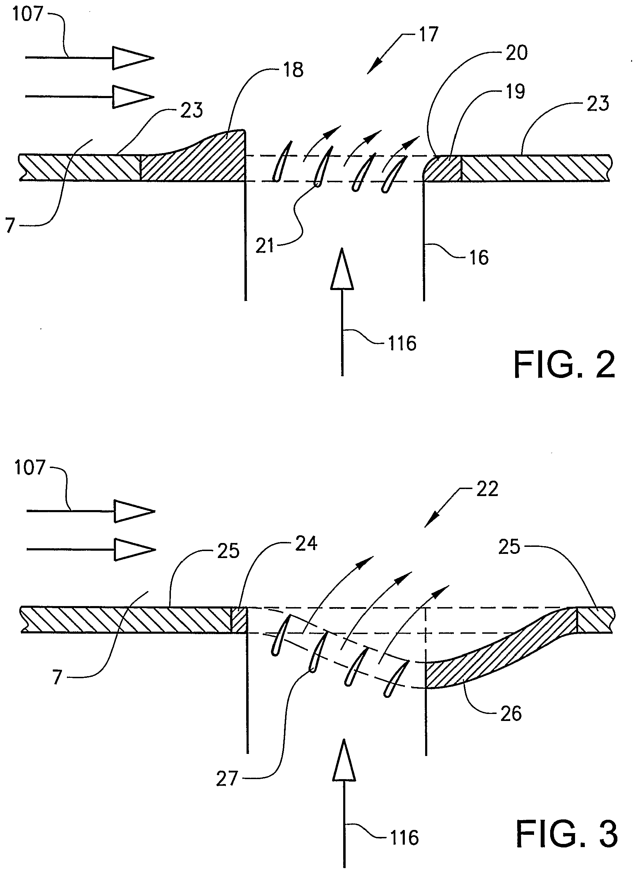

Figure 2 shows a cut side view of a first embodiment of a bleed structure 17 forming a bleed passage outlet to the secondary gas duct 7. The structure 17 comprises a first, upstream wall portion 18 forming a leading edge of the outlet. The structure 17 further comprises a second, downstream wall portion 19 forming a trailing edge of the outlet. The first and second wall portions 18,19 end at different distances in the extension direction of the passage 16.

The wall 23 defining the gas duct 7 is substantially at the same level across the bleed opening (outlet). Thus, the wall 23 extends along a substantially straight line across the opening.

More specifically, the upstream wall portion 18 is raised relative to the adjacent surfaces of the structure and the gas duct wall 23. Further, the upstream wall portion 18 is raised relative to the downstream wall portion 19 so that a gas flow 107 in the duct 7 is directed somewhat radially away from the outlet and thereby creating a low pressure region outside the outlet. The upstream wall portion 18 is smoothed and aerodynamically rounded for reducing discontinuities in the fan gas duct flow. Further, a transition from said upstream wall portion 18 to the adjacent gas duct wall 23 is even so that any disturbance caused by bleed on the passing gas flow 107 is minimized.

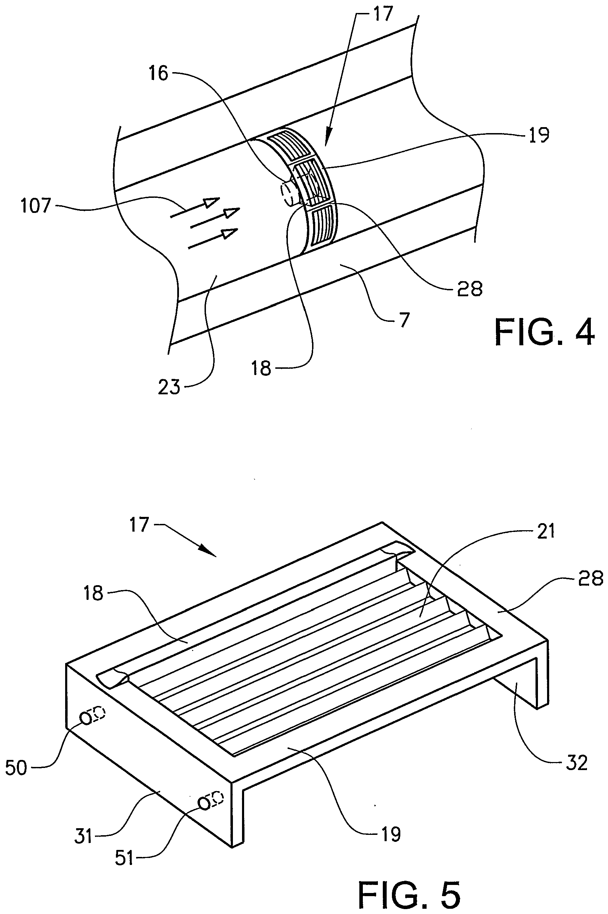

The raised upstream wall portion 18 forms an elongated projection extending in the circumferential direction of the structure along an upstream side of the outlet, see also figure 5. The downstream wall portion 19 is substantially flush with the adjacent surfaces of the structure and the gas duct wall 23. A transition from the downstream wall portion 19 to the adjacent gas duct wall 23 is even so that any disturbance caused by bleed on the passing gas flow is minimized. Further, an end 20 of the downstream wall portion 19 facing the outlet 17 is chamfered defining a flow path for the bleed gas 116 from the bleed passage 16 to the gas duct 7.

Four airfoils 21 (or stator vanes) are arranged substantially in parallel to each other in the outlet, see also figure 5, for guiding the bleed gas flow 116 to the secondary gas duct 7. The airfoils 21 are arranged at a distance from each other in the axial direction 2 of the engine 1.

The bleed passage 16 defines a flow path for deflecting the gas with a substantial inclination in relation to the passing gas flow 107 in the secondary gas duct 7. Preferably, the gas is deflected at an angle of at least 45 degrees and especially at an angle of at least 60 degrees in relation to the passing gas flow. More specifically, in the shown embodiment, the gas is deflected at substantially right angles with the passing gas flow.

Figure 3 shows an alternative embodiment of a structure 22 forming a bleed passage outlet to the secondary gas duct 7. An upstream wall portion 24 is substantially flush with the adjacent surfaces of the structure and the gas duct wall 25. Further, a transition from said upstream wall portion 24 to the adjacent gas duct wall 25 is even so that any disturbance caused by bleed on the passing gas flow 107 is minimized.

The downstream wall portion 26 is lowered relative to the adjacent surfaces of the structure and the gas duct wall 25. More specifically, the lowered wall portion 26 is elongated and extends along the downstream side of the outlet. Further, the lowered wall portion 26 has a contoured shape and shows a smooth, uninterrupted surface facing the gas flow. A transition from the downstream wall portion 26 to the adjacent gas duct wall 25 is even so that any disturbance caused by bleed on the passing gas flow is minimized. The downstream wall portion 26 is aerodynamically rounded for reducing discontinuities in the fan gas duct flow 107. Four airfoils 27 are arranged substantially in parallel to each other in the outlet for guiding a bleed gas flow 116 to the secondary gas duct 7.

Figure 4 shows a perspective view of the outlet bleed structure 17 in figure 1 and 2. The bleed structure 17 forms an annular component comprising a plurality of circumferentially spaced bleed passage outlets through the inner wall 23 of the secondary gas duct 7. A rectangular frame 28 surrounds each outlet, see also figure 5. The frames are joined to each other via flanges 31,32, see figure 5, to form said annular component. The structure 17 comprises means 50,51 for connection to an adjacent frame. The connection means may for example comprise a bolt connection. Through-holes 50,51 extend through each flange 31,32 for said connection means.

The frame 28 comprises said upstream wall portion 18 and downstream wall portion 19. Thus, the frames 28 are separate pieces, which are positioned in a slot or aperture in the gas duct wall 23. The frames 28 are arranged relative to the edges of the gas duct wall defining the slot or aperture in such a manner that the frames are substantially flush with the gas duct wall so that a passing gas flow is not disturbed by the edges of the frames.

According to the embodiment shown in figure 4, the term "bleed structure" comprises the plurality of frames forming the annular component. According to an alternative, the bleed structure forms a unison ring. According to a further alternative, the term "bleed structure" comprises a single frame surrounding one or a plurality of openings.

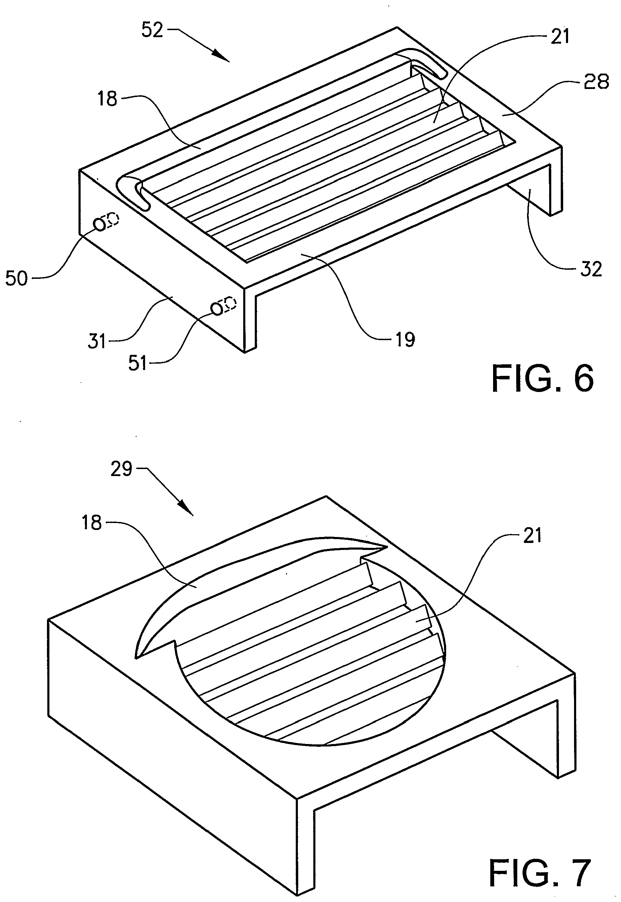

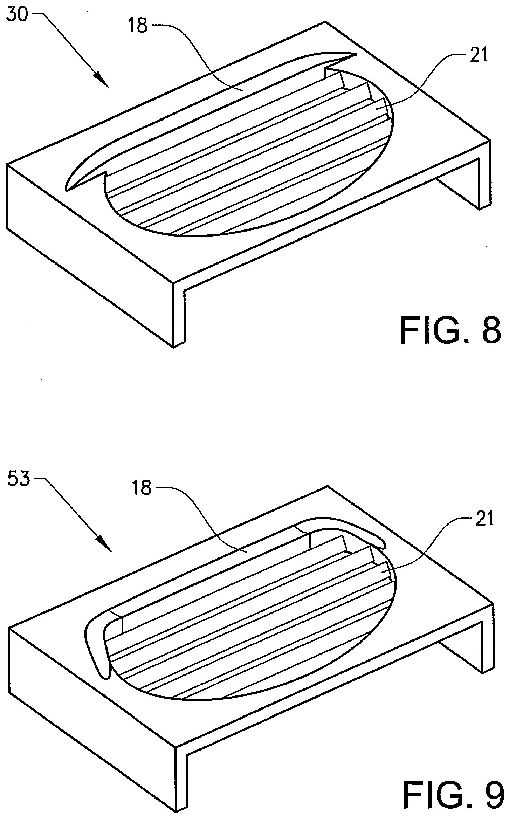

Figure 5 illustrates the bleed structure 17 comprising a rectangular frame with a rectangular opening and a grid of airfoils 21. The airfoils 21 extend between two opposite sides of the rectangular frame and are fixedly attached to the frame. The airfoils 21 are arranged in parallel to the upstream and downstream wall portions 18,19. The elongated projection 18 has rounded edges in the circumferential direction of the gas turbine. Figure 6 illustrates an alternative bleed structure 52. The elongated projection 18 extends at both ends a distance around the corner of the opening. Figure 7 illustrates a further alternative bleed structure 29 comprising a rectangular frame with a substantially circular opening. Figure 8 illustrates a further alternative bleed structure 30 comprising a rectangular frame with a substantially elliptical opening. Figure 9 illustrates a still further alternative bleed structure 53. The elongated projection 18 extends at both ends a distance around the curved periphery of the opening. Each of the four alternative bleed structures 29,30,52,53 comprises a raised upstream wall portion 18 and a grid of airfoils 21.

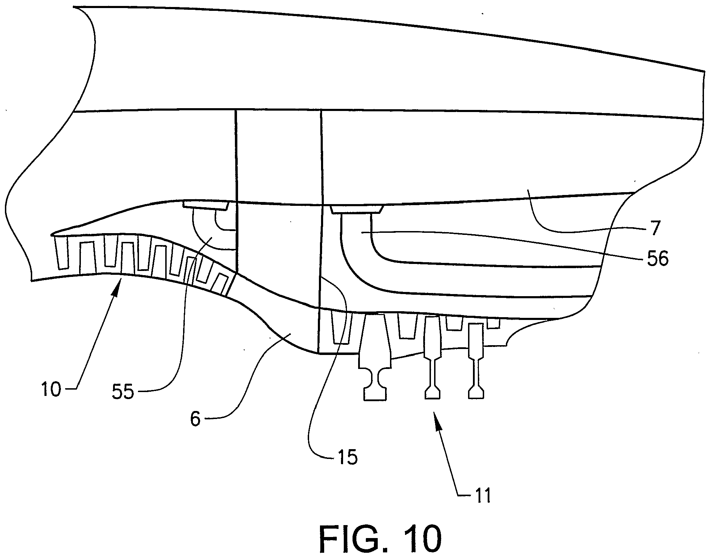

Figure 10 illustrates a compressor portion of an aircraft engine. More specifically, the region of the low pressure compressor 10 and the high pressure compressor 11 is shown. A bleed passage 55 is arranged to bleed air from the secondary gas duct 7 at a position upstream of the load carrying engine structure 15. The bled air may be introduced into the gas flow of the primary gas duct 6 or be used for cooling engine components or similar. An inlet of the bleed passage 55 is arranged in the inner wall defining the secondary gas duct 7.

A further bleed passage 56 is arranged to bleed air from the secondary gas duct 7 at a position downstream of the load carrying engine structure 15. The bled air is routed downstream for turbine cooling, but may as an alternative be introduced into the gas flow of the primary gas duct 6 or be used for cooling other engine components. An inlet of the bleed passage 56 is arranged in the inner wall defining the secondary gas duct 7.

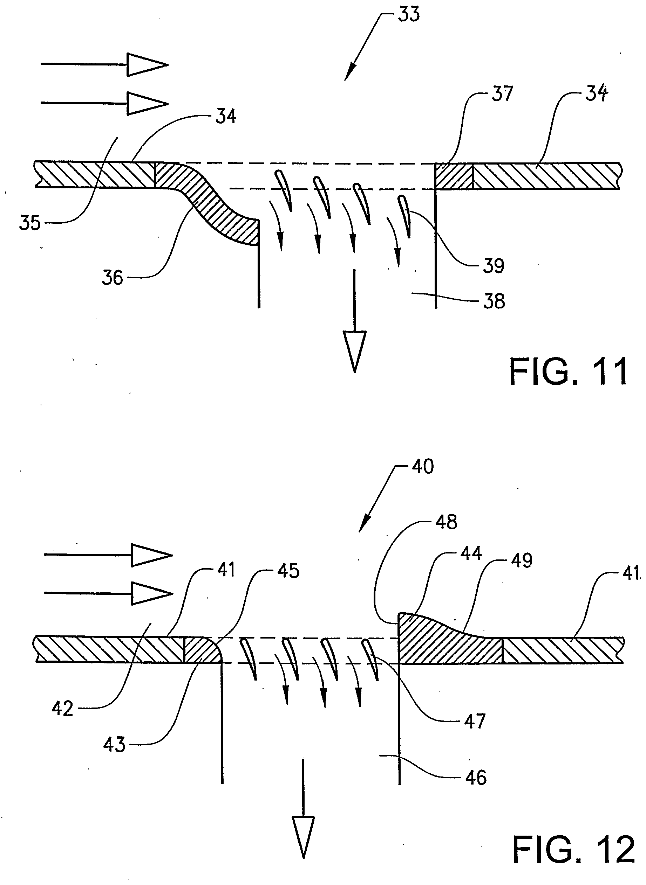

Figure 11 illustrates a first embodiment of a bleed passage inlet structure 33. The inlet bleed structure 33 is arranged in a wall 34 defining a gas duct from which gas is extracted. The gas duct 35 may, according to one example, be formed by the secondary gas duct 7 in figure 1, see figure 10.

The wall 34 defining the gas duct 7 is substantially at the same level across the bleed opening (inlet). Thus, the wall 34 extends along a substantially straight line across the opening.

The bleed passage 55,56 defines a flow path for deflecting the gas with a substantial inclination in relation to the passing gas flow in the secondary gas duct 7. Preferably, the gas is deflected at an angle of at least 45 degrees and especially at an angle of at least 60 degrees in relation to the passing gas flow. More specifically, in the shown embodiment, the gas is deflected at substantially right angles with the passing gas flow.

An upstream wall portion 36 is lowered relative to the adjacent surfaces of the structure and the gas duct wall 34. Further, a transition from said upstream wall portion 36 to the adjacent gas duct wall 34 is even so that any disturbance caused by bleed on the passing gas flow is minimized. The downstream wall portion 37 is substantially flush with the adjacent surfaces of the structure and the gas duct wall 34. A transition from the downstream wall portion 37 to the adjacent gas duct wall 34 is even so that any disturbance caused by bleed on the passing gas flow is minimized. More specifically, the lowered wall portion 36 is elongated and extends along the upstream side of the inlet. The lowered wall portion 36 extends away from the gas duct wall 34 defining a flow path for the bleed gas from the gas duct 35 to a bleed passage 38. Further, the lowered wall portion 36 has a contoured shape and shows a smooth, uninterrupted surface facing the gas flow. The upstream wall portion 36 is aerodynamically rounded for reducing discontinuities in the gas duct flow.

A plurality of airfoils 39 are arranged substantially in parallel to each other in the inlet for guiding a bleed gas flow from the gas duct 35.

Figure 12 illustrates a second embodiment of a bleed passage inlet structure 40. The inlet bleed structure 40 is arranged in a wall 41 defining a gas duct 42 from which gas is extracted. The structure 40 comprises a first, upstream wall portion 43 and a second, downstream wall portion 44. The upstream wall portion 43 is substantially flush with the adjacent surfaces of the structure and the gas duct wall 34. Further, an end 45 of the upstream wall portion 43 facing the inlet is chamfered defining a flow path for the bleed gas from the gas duct 42 to a bleed passage 46. The upstream wall portion 43 is smoothed and aerodynamically rounded for reducing discontinuities in the gas duct flow. A plurality of airfoils 47 are arranged in parallel to each other in the inlet for guiding a bleed gas flow from the gas duct 42.

The downstream wall portion 44 is raised relative to the adjacent surfaces of the structure and the gas duct wall 41. Further, the downstream wall portion 44 is raised relative to the upstream wall portion 43. The raised downstream wall portion 44 forms an elongated projection extending in the circumferential direction of the structure along a downstream side of the inlet. The downstream wall portion 44 has a substantially flat surface 48 facing the inlet and the surface 49 facing the gas duct 7 is smoothed and aerodynamically rounded for reducing discontinuities in the gas duct flow.

The bleed passage inlet structures of figures 11 and 12 may further have a similar frame configuration as shown in any of figures 5-9.

The wall portions defining the bleed passage opening are preferably stationary, i.e. non-variable with regard to each other.

The invention is also related to an arrangement for a gas turbine engine comprising the bleed structure described above. The arrangement comprises a section of a primary gas duct 6 for the engine, a section of a secondary gas duct 7 for the engine and said at least one bleed passage 16 connected to at least one of the primary gas duct section and the secondary gas duct section. Such an arrangement may be fabricated to form a separate unit, which in turn may be assembled to other units in order to build up an engine.

The invention is not in any way limited to the above described embodiments, instead a number of alternatives and modifications are possible without departing from the scope of the following claims.

According to an alternative to the embodiment where the bleed structure forms an annular component comprising a plurality of circumferentially spaced bleed passage openings, it may form an annular component comprising a continuous slot in a circumferential direction of the structure.

According to a further alternative, the bleed passage is arranged downstream of the combustor 12 for routing air from the primary gas duct 6 to the secondary gas duct 7. More specifically, it may be arranged between high pressure turbine 13 and the low pressure turbine 14.

According to a further alternative, the outlet configuration is not limited to be arranged through a radially inner wall of an outer gas duct, but may also be arranged in a radially outer wall of an inner gas duct, like the primary gas duct 6.

According to a further alternative, the inlet configuration is not limited to be arranged through a radially inner wall of an outer gas duct for extracting gas radially inwards, but may also be arranged in a radially outer wall of an inner gas duct, like the primary gas duct 6, for extracting gas radially outwards.

Further the inlet configuration is not limited to form an inlet to a bleed passage between a primary and a secondary gas duct. The inlet configuration may be used for a bleed passage from a gas duct for routing air to secondary systems like turbine cooling systems, aircraft systems etc.

Further, the number of airfoils in each bleed passage opening may of course differ from the four airfoils shown in the drawings.

Further, as an alternative to the embodiment where the bleed structure forms an annular component comprising a plurality of circumferentially spaced bleed passage openings, some of the openings, for example every second opening in the circumferential direction, is free from airfoils. According to a further alternative embodiment, the bleed structure is free from any airfoils.

The frames are preferably rounded in the circumferential direction of the gas duct in order to form a circular, continuous, uninterrupted ring, i.e. a ring free of any abrupt transitions between adjacent frames.

The invention has been described above for a two shaft engine, however, the invention may of course also be applied in a one shaft engine or in a three shaft engine.

According to an alternative embodiment of the bleed structure shown in figure 4 and 5, the frames are fastened to an annular support member. Thus, in such a configuration, the frames are not connected directly to each other, but instead to the annular support member. Consequently, the flanges with holes for connection means do not extend perpendicular to an opening plane of the frame, but are instead arranged in line with the frame.

According to an alternative embodiment of the bleed structure, there is no frame around the respective opening. Thus, the opening ends directly in the gas duct wall.

## Claims

1. A bleed structure (17,22,29,30,33,40,52,53) for a bleed passage (16,55,56) in a gas turbine engine (1), the structure comprises a first wall portion (18,24,36,43) defining a first side of an opening for the passage, and a second wall portion (19,26,37,44) defining a second side, opposite the first side of the opening, wherein a gas duct wall (23,34) is substantially at the same level across the bleed passage opening, wherein the first and second wall portions (18,24,36,43;19,26,37,44) end at different positions in an extension direction of the bleed passage opening, that one of the first and second wall portions (18,44) is raised relative to the adjacent surfaces of the structure, and that the raised wall portion forms an elongated projection (18,44) along said side of the opening, **characterized in that** the bleed structure further comprising at portion forms an elongated projection (18,44) along said least one airfoil (21,27,39,47) in said bleed passage opening for guiding a gas flow in the passage.

2. A bleed structure (17,22,29,30,33,40,52,53) for a bleed passage (16,55,56) in a gas turbine engine (1), the structure comprises a first wall portion (18,24,36,43) defining a first side of an opening for the passage, and a second wall portion (19,26,37,44) defining a second side, opposite the first side of the opening, wherein a gas duct wall (23,34) is substantially at the same level across the bleed passage opening, wherein the first and second wall portions (18,24,36,43;19,26,37,44) end at different positions in an extension direction of the bleed passage opening, that one of the first and second wall portions (26,36) is lowered relative to the adjacent surfaces of the structure and that the lowered wall portion (26,36) is elongated and extends along said side of the opening, **characterized in that** the bleed structure further comprising at least one airfoil (21,27,39,47) in said bleed passage opening for guiding a gas flow in the passage.

3. A bleed structure according to any preceding claim, wherein the other of the first and second wall portions (19,24,37,43) is flush with the adjacent surfaces of the structure.

4. A bleed structure according to any preceding claim, wherein a plurality of airfoils (21,27,39,47) are arranged substantially in parallel to each other in said bleed passage opening.

5. A bleed structure according to any preceding claim, comprising at least one frame (28) surrounding the opening, and that the frame (28) comprises said first and second wall portions (18,19).

6. A bleed structure according to any preceding claim, wherein the bleed structure forms an annular component (17) comprising a plurality of circumferentially spaced bleed passage openings.

7. A bleed structure according to any of claim 1-5, wherein the passage opening forms a continuous slot in a circumferential direction of the structure.

8. A bleed structure according to any preceding claim, wherein the bleed passage opening forms a bleed passage outlet.

9. A bleed structure according to any preceding claim, wherein the bleed passage opening forms a bleed passage inlet.

10. A bleed structure according to any preceding claim, wherein a transition from said first wall portion (18,24,36,43) to an adjacent gas duct wall (23,25,34,41) is even so that any disturbance caused by bleed on a passing gas flow is minimized.

11. A bleed structure according to any preceding claim, wherein a transition from said second wall portion (19,26,37,44) to an adjacent gas duct wall (23,25,34,41) is even so that any disturbance caused by bleed on a passing gas flow is minimized.

12. A bleed structure according to any preceding claim, wherein the bleed passage (16,55,56) defines a flow path for deflecting the gas with a substantial inclination in relation to a passing gas flow.

13. A bleed arrangement for a gas turbine engine (1), the arrangement comprising a section of a primary gas duct (6) for the engine, a section of a secondary gas duct (7) for the engine, at least one bleed passage (16,55,56) connected to at least one of the primary gas duct section and the secondary gas duct section, and a bleed structure (17,22,29,30,33,40,52,53) according to any preceding claim, wherein the structure is arranged so that the first wall portion (18,24,36,43) is located upstream of the opening and the second wall portion (19,26,37,44) is located downstream of the opening.

14. A bleed arrangement according to claim 13,
wherein the bleed passage (16,55,56) extends between the primary gas duct section and the secondary gas duct section.

15. A gas turbine engine comprising a primary gas duct (6), a secondary gas duct (7) and at least one bleed passage (16,55,56) connected to at least one of the primary gas duct, (6) the secondary gas duct (7) and a bleed structure (17,22,29,30,33,40,52,53) according to any of claims 1-12, wherein the structure is arranged so that the first wall portion (18,24,36,43) is located upstream of the opening and the second wall portion (19,26,37,44) is located downstream of the opening.

16. A gas turbine engine according to claim 15, wherein said bleed passage (17,22,29,30,52,53) is arranged to bleed a gas flow from the primary gas duct (6) to the secondary gas duct (7).

17. A gas turbine engine according to claim 16, wherein said bleed structure (27,22,29,30) is arranged at an outlet of the bleed passage (16).

18. A gas turbine engine according to claim 16 or 17, wherein said bleed structure (33,40) is arranged at an inlet of the bleed passage.

19. An aircraft engine comprising a primary gas duct (6), a secondary gas duct (7), at least one bleed passage (16) extending between the primary gas duct (6) and the secondary gas duct (17) and a bleed structure (17,22,29,30,33,40) according to any of claims 1-12.

## Patentansprüche

1. Entlüftungsstruktur (17, 22, 29, 30, 33, 40, 52, 53) für einen Entlüftungsdurchgang (16, 55, 56) in einem Gasturbinenmotor (1), wobei die Struktur einen ersten Wandteil (18, 24, 36, 43), der eine erste Seite einer Öffnung für den Durchgang definiert, und einen zweiten Wandteil (19, 26, 37, 44), der eine zweite Seite gegenüber der ersten Seite der Öffnung definiert, umfasst, wobei sich eine Gaskanalwand (23, 34) im Wesentlichen auf gleicher Höhe über die Entlüftungsdurchgangsöffnung befindet, wobei der erste und der zweite Wandteil (18, 24, 36, 43; 19, 26, 37, 44) in einer Erstreckungsrichtung an verschiedenen Stellen der Entlüftungsdurchgangsöffnung enden, der erste oder der zweite Wandteil (18, 44) bezüglich der benachbarten Flächen der Struktur erhaben ist und der erhabene Wandteil einen länglichen Vorsprung (18, 44) entlang der Seite der Öffnung bildet, **dadurch gekennzeichnet, dass** die Entlüftungsstruktur ferner umfassend mindestens ein Schaufelblatt (21, 27, 39, 47) in der Entlüftungsdurchgangsöffnung zum Führen eines Gasstroms in dem Durchgang.

2. Entlüftungsstruktur (17, 22, 29, 30, 33, 40, 52, 53) für einen Entlüftungsdurchgang (16, 55, 56) in einem Gasturbinenmotor (1), wobei die Struktur einen ersten Wandteil (18, 24, 36, 43), der eine erste Seite einer Öffnung für den Durchgang definiert, und einen zweiten Wandteil (19, 26, 37, 44), der eine zweite Seite gegenüber der ersten Seite der Öffnung definiert, umfasst, wobei sich eine Gaskanalwand (23, 34) im Wesentlichen auf gleicher Höhe über die Entlüftungsdurchgangsöffnung befindet, wobei der erste und der zweite Wandteil (18, 24, 36, 43; 19, 26, 37, 44) in einer Erstreckungsrichtung an verschiedenen Stellen der Entlüftungsdurchgangsöffnung enden, der erste oder der zweite Wandteil (26, 36) bezüglich der benachbarten Flächen der Struktur abgesenkt ist und der abgesenkte Wandteil (26, 36) länglich ist und sich entlang der Seite der Öffnung erstreckt, **dadurch gekennzeichnet, dass** die Entlüftungsstruktur ferner mindestens ein Schaufelblatt (21, 27, 39, 47) in der Entlüftungsdurchgangsöffnung zum Führen eines Gasstroms in dem Durchgang umfasst.

3. Entlüftungsstruktur nach einem vorhergehenden Anspruch, wobei der andere des ersten und des zweiten Wandteils (19, 24, 37, 43) mit den benachbarten Flächen der Struktur bündig ist.

4. Entlüftungsstruktur nach einem vorhergehenden Anspruch, wobei mehrere Schaufelblätter (21, 27, 39, 47) im Wesentlichen parallel zueinander in der Entlüftungsdurchgangsöffnung angeordnet sind.

5. Entlüftungsstruktur nach einem vorhergehenden Anspruch, die mindestens einen die Öffnung umgebenden Rahmen (28) umfasst, wobei der Rahmen (28) den ersten und den zweiten Wandteil (18, 19) umfasst.

6. Entlüftungsstruktur nach einem vorhergehenden Anspruch, wobei die Entlüftungsstruktur eine ringförmige Komponente (17) bildet, die mehrere um den Umfang beabstandete Entlüftungsdurchgangsöffnungen umfasst.

7. Entlüftungsstruktur nach einem der Ansprüche 1 - 5, wobei die Durchgangsöffnung einen durchgehenden Schlitz in einer Umfangsrichtung der Struktur bildet.

8. Entlüftungsstruktur nach einem vorhergehenden Anspruch, wobei die Entlüftungsdurchgangsöffnung einen Entlüftungsdurchgangauslass bildet.

9. Entlüftungsstruktur nach einem vorhergehenden Anspruch, wobei die Entlüftungsdurchgangsöffnung einen Entlüftungsdurchgangeinlass bildet.

10. Entlüftungsstruktur nach einem vorhergehenden Anspruch, wobei ein Übergang von dem ersten Wandteil (18, 24, 36, 43) zu einer benachbarten Gaskanalwand (23, 25, 34, 41) gleichmäßig ist, so dass jegliche durch Entlüftung bei einem passierenden Gasstrom verursachte Störung minimiert ist.

11. Entlüftungsstruktur nach einem vorhergehenden Anspruch, wobei ein Übergang von dem zweiten Wandteil (19, 26, 37, 44) zu einer benachbarten Gaskanalwand (23, 25, 34, 41) gleichmäßig ist, so dass jegliche durch Entlüftung bei einem passierenden Gasstrom verursachte Störung minimiert ist.

12. Entlüftungsstruktur nach einem vorhergehenden Anspruch, wobei der Entlüftungsdurchgang (16, 55, 56) einen Strömungspfad zum Ablenken des Gases mit einer starken Neigung bezüglich eines passierenden Gasstroms definiert.

13. Entlüftungsanordnung für einen Gasturbinenmotor (1), wobei die Anordnung einen Abschnitt eines Primärgaskanals (6) für den Motor, einen Abschnitt eines Sekundärgaskanals (7) für den Motor, mindestens einen Entlüftungsdurchgang (16, 55, 56), der mit dem Primärgaskanalabschnitt und/oder dem Sekundärgaskanalabschnitt verbunden ist, und eine Entlüftungsstruktur (17, 22, 29, 30, 33, 40, 52, 53) nach einem vorhergehenden Anspruch umfasst, wobei die Struktur so angeordnet ist, dass der erste Wandteil (18, 24, 36, 43) stromaufwärts der Öffnung positioniert ist und der zweite Wandteil (19, 26, 37, 44) stromabwärts der Öffnung positioniert ist.

14. Entlüftungsanordnung nach Anspruch 13, wobei sich der Entlüftungsdurchgang (16, 55, 56) zwischen dem Primärgaskanalabschnitt und dem Sekundärgaskanalabschnitt erstreckt.

15. Gasturbinenmotor, umfassend einen Primärgaskanal (6), einen Sekundärgaskanal (7) und mindestens einen Entlüftungsdurchgang (16, 55, 56), der mit dem Primärgaskanal (6) und/oder dem Sekundärgaskanal (7) verbunden ist, und eine Entlüftungsstruktur (17, 22, 29, 30, 33, 40, 52, 53) nach einem der Ansprüche 1 - 12, wobei die Struktur so angeordnet ist, dass der erste Wandteil (18, 24, 36, 43) stromaufwärts der Öffnung und der zweite Wandteil (19, 26, 37, 44) stromabwärts der Öffnung positioniert ist.

16. Gasturbinenmotor nach Anspruch 15, wobei der Entlüftungsdurchgang (17, 22, 29, 30, 52, 53) dazu angeordnet ist, einen Gasstrom aus dem Primärgaskanal (6) zum Sekundärgaskanal (7) zu entlüften.

17. Gasturbinenmotor nach Anspruch 16, wobei die Entlüftungsstruktur (17, 22, 29, 30) an einem Auslass des Entlüftungsdurchgangs (16) angeordnet ist.

18. Gasturbinenmotor nach Anspruch 16 oder 17, wobei die Entlüftungsstruktur (33, 40) an einem Einlass des Entlüftungsdurchgangs angeordnet ist.

19. Flugzeugtriebwerk, umfassend einen Primärgaskanal (6), einen Sekundärgaskanal (7), mindestens einen Entlüftungsdurchgang (16), der sich zwischen dem Primärgaskanal (6) und dem Sekundärgaskanal (17) erstreckt, und eine Entlüftungsstruktur (17, 22, 29, 30, 33, 40) nach einem der Ansprüche 1 bis 12.

## Revendications

1. Structure de ventilation (17, 22, 29, 30, 33, 40, 52, 53) pour un passage de ventilation (16, 55, 56) dans un moteur à turbine à gaz (1), la structure comprenant une première partie de paroi (18, 24, 36, 43) définissant un premier côté d'une ouverture pour le passage, et une seconde partie de paroi (19, 26, 37, 44) définissant un second côté, opposé au premier côté de l'ouverture, dans laquelle une paroi de conduit de gaz (23, 34) se trouve sensiblement au même niveau à travers l'ouverture de passage de ventilation, dans laquelle les première et seconde parties de paroi (18, 24, 36, 43; 19, 26, 37, 44) se terminent à des positions différentes dans une direction d'extension de l'ouverture de passage de ventilation, dans laquelle une des première et seconde parties de paroi (18, 44) est surélevée par rapport aux surfaces adjacentes de la structure, et dans laquelle la partie de paroi surélevée forme une saillie allongée (18, 44) le long dudit côté de l'ouverture, **caractérisée en ce que** la structure de ventilation comprenant en outre au moins un profil aérodynamique (21, 27, 39, 47) dans ladite ouverture de passage de ventilation pour guider un écoulement de gaz dans le passage.

2. Structure de ventilation (17, 22, 29, 30, 33, 40, 52, 53) pour un passage de ventilation (16, 55, 56) dans un moteur à turbine à gaz (1), la structure comprenant une première partie de paroi (18, 24, 36, 43) définissant un premier côté d'une ouverture pour le passage, et une seconde partie de paroi (19, 26, 37, 44) définissant un second côté, opposé au premier côté de l'ouverture, dans laquelle une paroi de conduit de gaz (23, 34) se trouve sensiblement au même niveau à travers l'ouverture de passage de ventilation, dans laquelle les première et seconde parties de paroi (18, 24, 36, 43; 19, 26, 37, 44) se terminent à des positions différentes dans une direction d'extension de l'ouverture de passage de ventilation, dans laquelle une des première et seconde parties de paroi (26, 36) est abaissée par rapport aux surfaces adjacentes de la structure, et dans laquelle la partie de paroi abaissée (26, 36) est allongée et s'étend le long dudit côté de l'ouverture, **caractérisée en ce que** la structure de ventilation comprend en outre au moins un profil aérodynamique (21, 27, 39, 47) dans ladite ouverture de passage de ventilation pour guider un écoulement de gaz dans le passage.

3. Structure de ventilation selon l'une quelconque des revendications précédentes, dans laquelle l'autre des première et seconde parties de paroi (19, 24, 37, 43) est à fleur des surfaces adjacentes de la structure.

4. Structure de ventilation selon l'une quelconque des revendications précédentes, dans laquelle une pluralité de profils aérodynamiques (21, 27, 39, 47) sont agencés sensiblement parallèlement les uns aux autres dans ladite ouverture de passage de ventilation.

5. Structure de ventilation selon l'une quelconque des revendications précédentes, comprenant au moins un cadre (28) qui entoure l'ouverture, et dans laquelle le cadre (28) comprend lesdites première et seconde parties de paroi (18, 19).

6. Structure de ventilation selon l'une quelconque des revendications précédentes, dans laquelle la structure de ventilation forme un composant annulaire (17) comprenant une pluralité d'ouvertures de passage de ventilation espacées de façon circonférentielle.

7. Structure de ventilation selon l'une quelconque des revendications 1 à 5, dans laquelle l'ouverture de passage forme une fente continue dans une direction circonférentielle de la structure.

8. Structure de ventilation selon l'une quelconque des revendications précédentes, dans laquelle l'ouverture de passage de ventilation forme une sortie de passage de ventilation.

9. Structure de ventilation selon l'une quelconque des revendications précédentes, dans laquelle l'ouverture de passage de ventilation forme une entrée de passage de ventilation.

10. Structure de ventilation selon l'une quelconque des revendications précédentes, dans laquelle une transition entre ladite première partie de paroi (18, 24, 36, 43) et une paroi de conduit de gaz adjacente (23, 25, 34, 41) est uniforme de telle sorte que toute perturbation provoquée par la ventilation sur un écoulement de gaz passant soit minimisée.

11. Structure de ventilation selon l'une quelconque des revendications précédentes, dans laquelle une transition entre ladite seconde partie de paroi (19, 26, 37, 44) et une paroi de conduit de gaz adjacente (23, 25, 34, 41) est uniforme de telle sorte que toute perturbation provoquée par la ventilation sur un écoulement de gaz passant soit minimisée.

12. Structure de ventilation selon l'une quelconque des revendications précédentes, dans laquelle le passage de ventilation (16, 55, 56) définit un chemin d'écoulement pour défléchir le gaz avec une inclinaison substantielle par rapport à un écoulement de gaz passant.

13. Agencement de ventilation pour un moteur à turbine à gaz (1), l'agencement comprenant une section d'un conduit de gaz primaire (6) pour le moteur, une section d'un conduit de gaz secondaire (7) pour le moteur, au moins un passage de ventilation (16, 55, 56) connecté à au moins une parmi la section de conduit de gaz primaire et la section de conduit de gaz secondaire, et une structure de ventilation (17, 22, 29, 30, 33, 40, 52, 53) selon l'une quelconque des revendications précédentes, dans lequel la structure est agencée de telle sorte que la première partie de paroi (18, 24, 36, 43) soit située en amont de l'ouverture et que la seconde partie de paroi (19, 26, 37, 44) soit située en aval de l'ouverture.

14. Agencement de ventilation selon la revendication 13, dans lequel le passage de ventilation (16, 55, 56) s'étend entre la section de conduit de gaz primaire et la section de conduit de gaz secondaire.

15. Moteur à turbine à gaz comprenant un conduit de gaz primaire (6), un conduit de gaz secondaire (7) et au moins un passage de ventilation (16, 55, 56) connecté à au moins un parmi le conduit de gaz primaire (6), le conduit de gaz secondaire (7) et une structure de ventilation (17, 22, 29, 30, 33, 40, 52, 53) selon l'une quelconque des revendications 1 à 12, dans lequel la structure est agencée de telle sorte que la première partie de paroi (18, 24, 36, 43) soit située en amont de l'ouverture et que la seconde partie de paroi (19, 26, 37, 44) soit située en aval de l'ouverture.

16. Moteur à turbine à gaz selon la revendication 15, dans lequel ledit passage de ventilation (17, 22, 29, 30, 52, 53) est agencé de manière à faire circuler un écoulement de gaz depuis le conduit de gaz primaire (6) jusqu'au conduit de gaz secondaire (7).

17. Moteur à turbine à gaz selon la revendication 16, dans lequel ladite structure de ventilation (17, 22, 29, 30) est agencée à une sortie du passage de ventilation (16).

18. Moteur à turbine à gaz selon la revendication 16 ou 17, dans lequel ladite structure de ventilation (33, 40) est agencée à une entrée du passage de ventilation.

19. Moteur d'avion comprenant un conduit de gaz primaire (6), un conduit de gaz secondaire (7), au moins un passage de ventilation (16) qui s'étend entre le conduit de gaz primaire (6) et le conduit de gaz secondaire (17), et une structure de ventilation (17, 22, 29, 30, 33, 40) selon l'une quelconque des revendications 1 à 12.
